Europäisches Patentamt

European Patent Office

Office européen des brevets

(11) Numéro de publication: **0 260 583**
**A1**

## DEMANDE DE BREVET EUROPEEN

(21) Numéro de dépôt: **87113150.4**

(22) Date de dépôt: **09.09.87**

(51) Int. Cl.⁴: **G01B 5/06**

(30) Priorité: **11.09.86 FR 8612832**

(43) Date de publication de la demande:
**23.03.88 Bulletin 88/12**

(84) Etats contractants désignés:
**CH DE FR GB LI SE**

(71) Demandeur: **DYNAFER S.A.**
**14, rue Cernil-Antoine**
**CH-2300 La Chaux-de-Fonds(CH)**

(72) Inventeur: **Beaumann, Fernand**
**Rue Bournot 17**
**CH-2400 Le Locle(CH)**

(74) Mandataire: **Caron, Gérard et al**
**ICB Ingénieurs Conseils en Brevets SA**
**Passage Max. Meuron 6**
**CH-2001 Neuchâtel(CH)**

(54) **Palpeur de mesure de dimensions.**

(57) Le palpeur (5) fait partie d'un équipement de mesure (1, 27, 28) pour permettre la mesure de dimensions de pièces placées sur un posage (3). La tige de palpage (9) du palpeur peut être relevée à l'aide d'un levier (18) pivotant dans une bride (13) montée de façon amovible sur le boîtier (7) du palpeur. Le dispositif de relevage (6) équipé de ce levier est maniable et permet une mesure rapide de pièces.

Fig.1

**EP 0 260 583 A1**

## PALPEUR DE MESURE DE DIMENSIONS

La présente invention concerne les instruments de mesure de dimensions et elle a trait, plus particulièrement, à un palpeur de mesure permettant de fournir un signal représentant la dimension à mesurer, ce signal étant exploité en l'appliquant à un compteur qui est capable d'afficher la dimension mesurée.

Un tel palpeur comporte un boîtier contenant un système transducteur, tel qu'une règle optique par exemple, coopérant avec un dispositif opto-électronique capable de transformer le déplacement de la règle en un signal électrique exploitable par le compteur.

La règle optique est couplée à une tige de palpage montée coulissante dans le boîtier et destinée, au moment de la mesure, à venir s'appliquer sur la pièce à mesurer, celle-ci étant posée contre une butée de référence ménagée sur l'instrument de mesure.

La tige de palpage est associée à une dispositif de poussée élastique monté dans le boîtier et sollicitant en permanence la tige vers sa position extrême sortie. Ce dispositif de poussée peut comprendre un simple ressort ou éventuellement être réalisé sous la forme d'un mécanisme à commande hydraulique ou électrique. Quoi qu'il en soit, pour effectuer la mesure, la tige de palpage doit d'abord être amenée vers sa position rentrée pour permettre la mise en place de la pièce à mesurer contre la butée de référence, puis être relâchée pour que sa pointe de mesure puisse venir en contact avec la pièce. C'est pourquoi, le palpeur comporte des moyens de relevage de la tige de palpage qui sont destinés à déplacer celle-ci vers sa position entièrement rentrée, à l'encontre de l'action du dispositif de poussée élastique.

Un palpeur du type que l'on vient de décrire brièvement est disponible sur le marché et on en trouve une description complète dans une brochure de la Société Dr. Johannes Heidenhain, Postfach 1260, D-8225 Traunreut, Allemagne Fédérale.

Dans ce cas, les moyens de relevage comportent un câble flexible qui permet de commander le relevage de la tige de palpage à la façon des commandes à distance des appareils photographiques. Le constructeur de ce palpeur propose également un dispositif de relevage automatique à commande pneumatique qui autorise une automatisation du processus de mesure.

Les inconvénients de ces deux dispositifs de relevage consiste en ce qu'ils sont peut compatibles avec des mesures rapides manuelles comme on désire fréquemment en faire dans des ateliers de prototype par exemple, ou pour contrôler des petites séries de pièces.

Dans le document GB 1 149 602, on décrit un dispositif de comptage des feuilles d'un empilement de feuilles comportant un palpeur de mesure muni d'une tige de palpage montée coulissante dans le boîtier de ce palpeur entre une position extrême instable rétractée et une position stable sortie. Cette tige est sollicitée en permanence vers cette position sortie par un dispositif de poussée à rappel élastique également monté dans le boîtier du palpeur.

Le dispositif de comptage comprend également un châssis dans lequel coulisse une pièce d'appui au moyen de laquelle un empilement de feuilles peut être serré contre une surface de référence du châssis. La pièce d'appui peut être relevée par un mécanisme comportant un bras de levier auquel est couplé une manette. Le bras de levier sert également à relever par contact direct la tige du palpeur qui, elle, ne vient pas directement en contact avec l'empilement de feuilles lors de la mesure. En d'autres termes, le bras de levier ainsi que la pièce d'appui servent à transmettre à la tige du palpeur le mouvement qu'elle doit effectuer entre sa position sortie et celle qui correspond à la hauteur de l'empilement de feuilles. Ce dispositif connu est inapproprié pour effectuer des mesures sur des pièces mécaniques, avec la précision que le palpeur lui-même est capable de fournir, car entre la pointe de la tige de palpage et la surface de la pièce à mesurer (l'empilement de feuilles) sont interposées plusieurs organes mobiles qui introduisent des erreurs de mesure inévitables dont l'ampleur est bien plus grande que les tolérances avec lesquelles un palpeur de mesure de dimensions du genre de la présente demande doit travailler.

On doit aussi remarquer que ce mécanisme rend le dispositif complexe et par conséquent coûteux.

L'invention a pour but de fournir un palpeur de mesure comportant un dispositif de relevage manuel simple et direct, n'interposant aucune pièce entre la tige de palpage et la pièce à mesurer.

L'invention a donc pour objet un palpeur de mesure pour un équipement de mesure de dimensions, comportant un boîtier, une tige de palpage montée coulissante dans le boîtier entre une position extrême instable rétractée et une position stable sortie vers laquelle cette tige est sollicitée en permanence par un dispositif de poussée à rappel élastique, également monté dans le boîtier, et un dispositif de relavage comprenant un organe pivotant qui est couplé mécaniquement d'une part à une organe d'actionnement manuel également pivotant et d'autre part, à ladite tige de palpage pour

**0 260 583**

permettre d'amener celle-ci vers sa position rétractée à l'encontre de la force de rappel dudit dispositif de rappel élastique, caractérisé en ce que ledit organe pivotant et ledit organe d'actionnement manuel sont montés en commun sur un même axe. de pivotement monté dans un support fixé sur le boîtier du palpeur, ledit organe pivotant étant couplé directement audit dispositif de poussée à rappel élastique.

Grâce à ces caractéristiques, l'organe pivotant n'agit pas directement sur la tige de palpage, mais sur le dispositif de poussée à rappel élastique du palpeur de sorte qu'il n'introduit aucune erreur dans la mesure. En outre, du fait que l'organe pivotant et l'organe d'actionnement sont montés sur un même axe, on obtient une grande simplicité de construction. Enfin, du fait que le support est monté directement sur le boîtier du palpeur, la construction de l'ensemble est ramassée et s'adapte facilement sur un poste de mesure placé dans un atelier de prototypes par exemple.

Suivant une caractéristique particulièrement avantageuse de l'invention, le support est formé par une bride enserrant le boîtier du palpeur et agencé de façon facilement amovible sur celui-ci.

De cette manière, le palpeur peut facilement être adapté, tantôt pour être utilisé sans le dispositif de relevage, tantôt avec celui-ci.

L'invention sera mieux comprise à l'aide de la description qui va suivre d'un mode de réalisation de l'invention, cette description n'étant donnée qu'à titre d'exemple et faite en référence aux dessins annexés sur lesquels:

    -la figure 1 est une vue en perspective d'un équipement de mesure comportant un palpeur suivant l'invention;

    -la figure 2 est une vue en coupe partielle, à plus grande échelle, du palpeur suivant l'invention;

    -la figure 3 est une vue en coupe suivant la ligne III - III de la figure 2;

    -la figure 4 est une vue latérale partielle du palpeur et de son dispositif releveur.

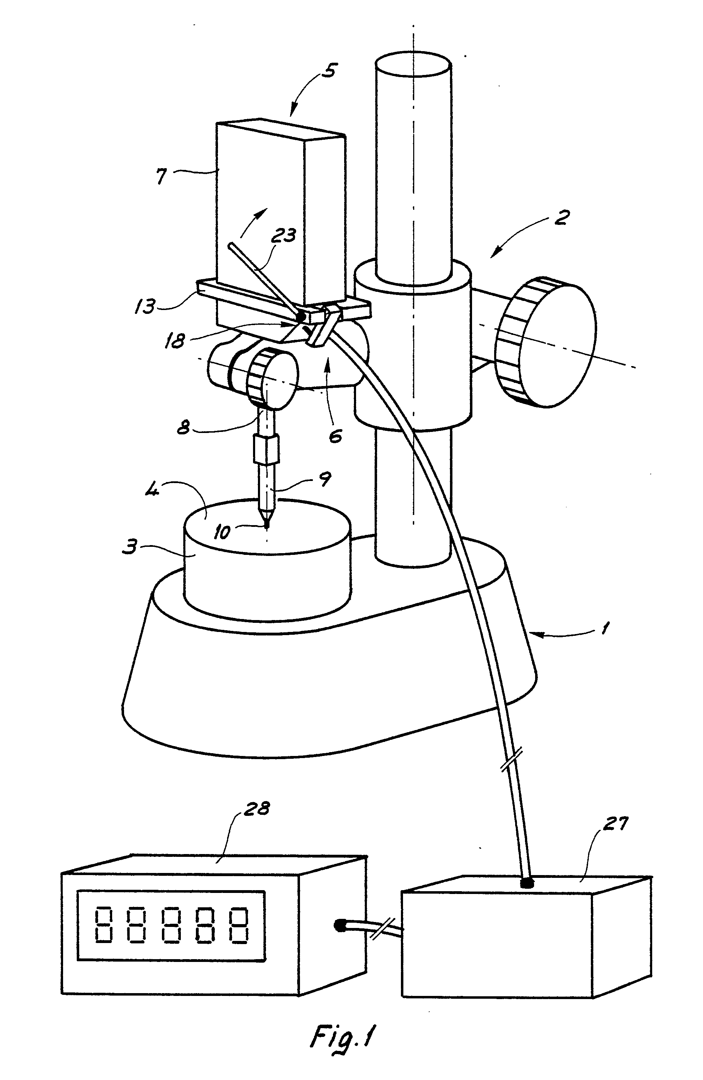

La figure 1 représente une vue générale d'un équipement de mesure pourvu d'un palpeur auquel est associé un dispositif de relevage suivant l'invention. Un support de mesure 1 comporte une potence 2 à hauteur réglable et un posage 3 formé ici par un plateau circulaire dont la face supérieure constitue une surface de référence 4 pour la mesure.

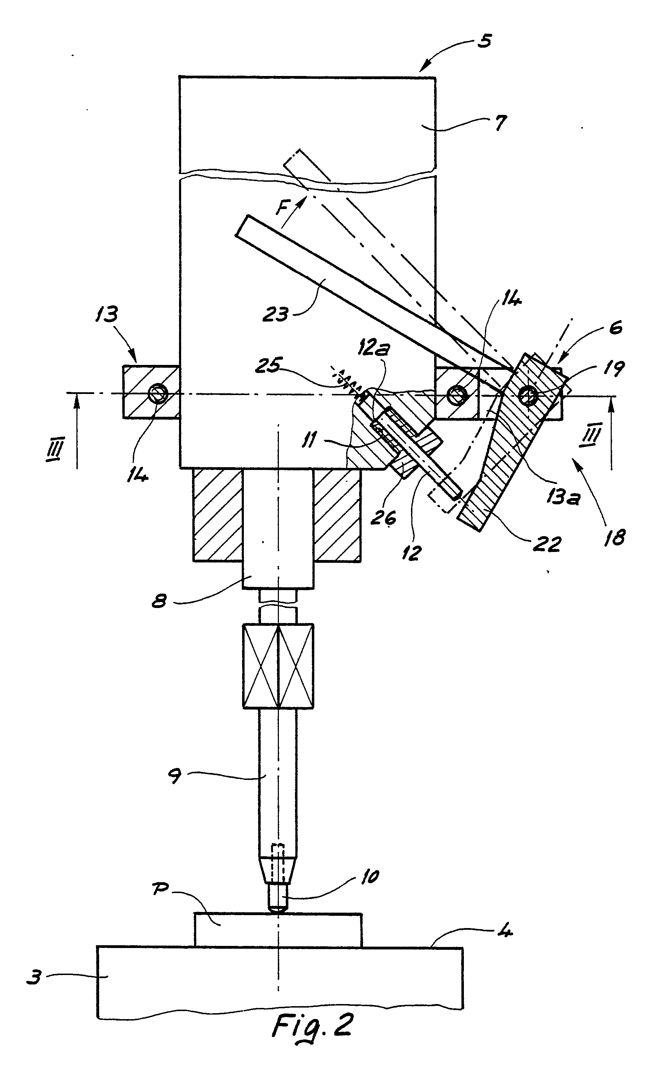

La potence 2 supporte un palpeur de mesure 5 équipé d'un dispositif de relevage 6 suivant l'invention que l'on va maintenant décrire en détail en se référant aux figures 2 à 4.

Le palpeur 5 peut être celui portant la référence de fabrication MT 10P/30P et mis sur le marché par la Société précitée.

De façon connue, ce palpeur comporte un boîtier 7 dans lequel est logé le système transducteur (non représenté) qui, dans l'exemple décrit, est du type à règle optique et à détecteur optoélectronique. De ce boîtier fait saillie un embout cylindrique 8 solidaire du boîtier et servant d'une part au guidage d'une tige de palpage 9 et d'autre part à la fixation du palpeur sur la potence 2.

La tige de palpage 9 est montée coulissante selon son axe dans le boîtier 7. A son extrémité libre, elle porte un organe de mesure 10 qui peut revêtir des formes diverses telles que celles décrites dans la brochure de la Société précitée. La tige de palpage est sollicitée élastiquement vers l'extérieur et elle peut être "relevée" (c'est-à-dire rentrée partiellement dans le boîtier) pour permettre la mesure d'une dimension, par exemple, l'épaisseur d'une pièce P (figure 2).

A cet effet, et toujours de façon connue, le boîtier 7 comporte un taraudage 11 dans lequel, selon les agencements connus, vient se visser le raccord d'un dispositif de commande à distance ou d'un dispositif pneumatique ou électrique de relevage (non représenté). Un tel dispositif comporte un poussoir coulissant 12 qui est connecté mécaniquement à la tige de palpage de telle sorte que lorsque le poussoir est rentré, la tige de palpage rentre également dans le boîtier 7. Le mécanisme de connexion étant connu en soi, on n'en donne pas une description détaillée ici.

Suivant l'invention le dispositif de relevage 6 est conçu de la façon suivante.

Une bride 13, faite en deux parties en forme de U 13a et 13b fixées l'une à l'autre par des vis 14, enserre le boîtier 7 du palpeur 5.

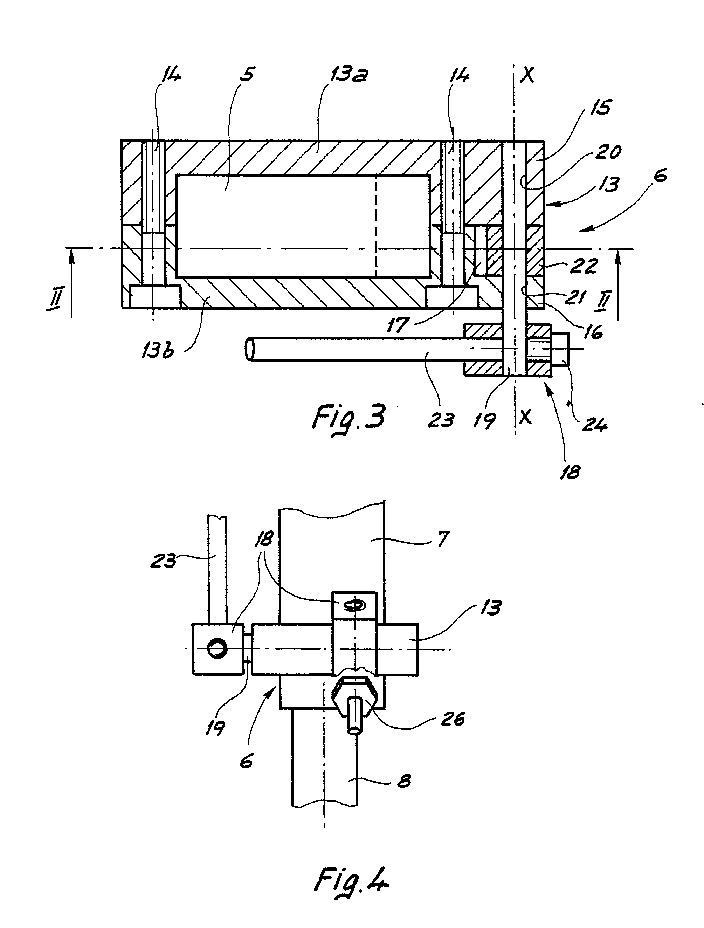

D'un côté de cette bride 13, c'est-à-dire près de l'une des petites faces du boîtier 7, chaque partie 13a ou 13b du levier comporte un prolongement 15, 16 respectivement, le prolongement 16 de la partie 13b étant évidé pour former ainsi avec le prolongement 15 de l'autre partie 13a une chape 17 (figure 3).

Un levier 18 est monté à rotation dans la bride 13. Ce levier comporte une broche 19 montée à rotation dans des trous 20 et 21 percés respectivement dans les prolongements 15 et 16 de la bride 13. Cette broche 19 définit un axe de rotation X - X du levier 18, axe qui, dans cet exemple, s'étend perpendiculairement aux grandes faces du boîtier 7. Le levier 18 comporte en outre deux branches 22 et 23 s'étendant chacune perpendiculairement à l'axe X - X de la broche 19. La première branche 22 coopère par son extrémité libre avec le poussoir coulissant 12, tandis que l'autre branche 23 est réalisée sous la forme d'une manette. Celle-ci est rendue solidaire de la broche 19 au moyen d'une vis 24 qui rend l'orientation angulaire de la manette 23 réglable par rapport à celle de la branche 22.

Sur la figure 2, on a symbolisé le dispositif de poussée élastique du palpeur par le ressort 25. Ce dispositif, en plus de solliciter la tige de palpage vers l'extérieur, ce qui est son rôle principal, tend également à sortir du boîtier 7 le poussoir 12, ce dont ce dernier est empêché grâce à un épaulement radial 12a. Cet épaulement vient en butée contre la face arrière d'un écrou 26 qui est vissé dans le taraudage 11 et dans lequel passe le poussoir 12. Plus le poussoir 12 est rentré dans le boîtier, plus la tige de palpage 9 rentre également dans celui-ci.

La figure 1 montre que le palpeur est connecté à un appareil d'amplification et d'analyse 27 chargé de traiter le signal électrique fourni par le système transducteur (non représenté) du palpeur. L'appareil 27 est connecté à un dispositif d'affichage 28.

Lorsque l'appareil de mesure n'est pas utilisé, sa tige de palpage 9 peut être complètement sortie, à condition que la surface 4 du posage 3 soit éloignée suffisamment de la pointe 10 de la tige. Pour donner une référence à une mesure à effectuer, on rapproche la potence 2 équipée du palpeur 5 de la surface 4 du posage 3 de manière que la pointe 10 touche celle-ci et on règle l'appareil 27 de telle manière que le dispositif d'affichage indique zéro.

Puis pour mesurer l'épaisseur de la pièce P, on relève la tige de palpage 9 en actionnant la manette 23 dans le sens de la flèche F.

La pièce P étant mise sur le posage 3, la manette est doucement ramenée vers l'arrière jusqu'à ce que la pointe 10 de la tige de palpage 9 repose sur la pièce P. Une nouvelle lecture sur le dispositif d'affichage en donne alors l'épaisseur. Le levier 18 occupe alors la position représentée en traits pleins sur la figure 2.

Pour enlever la pièce P, il suffit de ramener la manette 23 vers la position haute représentée sur la figure 2, moyennant quoi la tige de palpage 9 est complètement rentrée pour occuper sa position instable rentrée. Le levier 18 étant de nouveau relâché, la tige 9 sort complètement de l'appareil et une nouvelle mesure peut être effectuée.

On constate donc que l'invention fournit un dipositif de relevage simple et efficace pouvant être actionné dans le voisinage immédiat du palpeur et de la pièce à mesurer.

Bien entendu, de nombreuses variantes de l'invention peuvent être imaginée par les spécialistes.

En particulier, le dispositif suivant l'invention peut être utilisé avec un palpeur de mesure différent de celui mentionné ci-dessus, mais comprenant un système de relevage dont le poussoir est analogue et monté de la même façon dans le boîtier du palpeur. De plus, l'invention peut être utilisée dans un équipement de mesure autre que celui spécifiquement décrit.

On notera aussi que les dispositif de relevage suivant l'invention est facilement démontable, de sorte que l'on peut aisément utiliser le palpeur 5 avec les systèmes classiques de relevage, si cela est souhaité, après démontage du dispositif de relevage suivant l'invention.

Le levier 18 peut également être équipé d'un autre moyen d'actionnement que la manette 23, tel qu'un bouton moleté, par exemple, vissé sur la broche 19 à la place de la manette 23.

## Revendications

1. Palpeur de mesure pour un équipement de mesure de dimensions, comportant un boîtier (7), une tige de palpage (9) montée coulissante dans le boîtier (7) entre une position extrême instable rétractée et une position stable sortie vers laquelle cette tige (9) est sollicitée en permanence par un dispositif de poussée à rappel élastique (25), également monté dans le boîtier (7), et un dispositif de relevage (6) comprenant un organe pivotant (22) qui est couplé mécaniquement d'une part à un organe d'actionnement manuel (23) également pivotant et d'autre part, à ladite tige de palpage (9) pour permettre d'amener celle-ci vers sa position rétractée à l'encontre de la force de rappel dudit dispositif de rappel élastique (25), caractérisé en ce que ledit organe pivotant (22) et ledit organe d'actionnement manuel (23) sont montés en commun sur un même axe (X-X) de pivotement monté dans un support (13) fixé sur le boîtier (7) du palpeur, ledit organe pivotant étant couplé directement audit dispositif de poussée à rappel élastique.

2. Palpeur suivant la revendication 1, caractérisé en ce que ledit organe d'actionnement est une manette (23) s'étendant perpendiculairement à l'axe de pivotement (X - X) du levier (18).

3. Palpeur suivant la revendication 2, caractérise en ce que ladite manette (23) est montée réglable autour de l'axe de pivotement (X - X) du levier (18).

4. Palpeur suivant l'une quelconque des revendications précédentes, caractérisé en ce que ledit support est une bride (13) enserrant le boîtier (7) du palpeur.

5. Palpeur suivant la revendication 4, caractérisé en ce que ladite bride (13) est montée de façon amovible sur ledit boîtier (7).

Fig.1

Fig. 2

Fig.3

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 754 223  (DAIMLER-BENZ AG)<br>* Page 9, alinéa 1, figure 2 * | 1,2 | G 01 B    5/06 |
| D,A | GB-A-1 149 602  (B.H. MARSHALL)<br>* Page 2, lignes 91-121; figure 3 * | 1,2,4 | |
| A | DE-C-  863 419  (SIEMENS-SCHUCKERT)<br>* Page 2, lignes 27-40; figure * | 1,2 | |

| | | | DOMAINES TECHNIQUES RECHERCHES (Int. Cl.4) |
|---|---|---|---|
| | | | G 01 B |

Le présent rapport a été établi pour toutes les revendications

| Lieu de la recherche | Date d'achèvement de la recherche | Examinateur |
|---|---|---|
| LA HAYE | 17-12-1987 | RAMBOER P. |

EPO FORM 1503 03.82 (P0402)